# EUROPÄISCHE PATENTSCHRIFT

(11) **EP 3 273 577 B1**
(45) Veröffentlichungstag und Bekanntmachung des Hinweises auf die Patenterteilung: **02.11.2022**
(21) Anmeldenummer: 17179274.0
(22) Anmeldetag: 03.07.2017
(51) Int. Cl.: H02K 5/22, H02K 5/15, F16H 61/32

(54) **ELEKTRISCHE MASCHINE**
ELECTRIC MACHINE
MACHINE ÉLECTRIQUE

(30) Priorität: 18.07.2016 DE 102016213110
(43) Veröffentlichungstag der Anmeldung: 24.01.2018
(73) Patentinhaber: Brose Fahrzeugteile SE & Co. Kommanditgesellschaft, Würzburg, 97076 Würzburg (DE)
(72) Erfinder: GOEKE, Christof, 97076 Würzburg (DE); KABRA, Yogesh, 411028 Pune (IN); SALUNKHE, Dipak, 411062 Pune (IN)
(74) Vertreter: FDST Patentanwälte

(56) Entgegenhaltungen:
- DE-A1-102009 001 948
- DE-A1-102011 004 919
- DE-A1-102012 004 287
- DE-A1-102013 215 949
- US-A1- 2010 120 543

## Beschreibung

Die Erfindung betrifft eine elektrische Maschine mit einem eine elektrische Spule aufweisenden Stator. Die elektrische Maschine ist insbesondere ein Bestandteil eines Kraftfahrzeugs und vorzugsweise ein Elektromotor, wie ein bürstenloser Gleichstrommotor. Die Erfindung betrifft ferner einen Getriebeaktuator eines Kraftfahrzeugs mit einem Elektromotor.

Bei zumindest teilweise automatisierten Schaltgetrieben eines Kraftfahrzeugs werden die einzelnen Schaltstufen (Gänge) mittels eines Getriebeaktuators eingestellt. Hierfür weist der Getriebeaktuator einen sogenannten Schaltfinger und einen Elektromotor auf, wobei der Schaltfinger von dem Elektromotor verstellbar ist, und wobei die Position des Schaltfingers das gewünscht Übersetzungsverhältnis bestimmt. Als Elektromotor wird üblicherweise ein bürstenloser Elektromotor verwendet, dessen Stator mittels einer Elektronik bestromt wird. Die Elektronik umfasst eine Anzahl von Halbleiterbauelementen, die in einer Brückenschaltung verschalten sind. Die Brückenschaltung ist herkömmlicherweise eine B6-Schaltung, und der Stator weist drei Feldwicklungen auf, die mittels eines Verschaltungsrings entweder in einer Dreiecks- oder Sternschaltung miteinander verschalten sind. Zur Abschirmung und Vermeidung von etwaigen Beschädigungen der Feldwicklungen, die jeweils eine Anzahl an elektrischen Spulen umfassen, ist der Stator in einem Statorgehäuse angeordnet.

Das Statorgehäuse befindet sich zwischen einem A-seitigen und einem B-seitigen Lagerschild, sodass die beiden Lagerschilde das Statorgehäuse stirnseitig verschließen. Der B-seitigen Lagerschild weist Aussparungen auf, durch die elektrische Kontakte zur Kontaktierung des Verschaltungsrings mit der außerhalb des Statorgehäuses angeordneten Elektronik geführt sind. Der Elektromotor weist ferner einen Rotor mit einer Welle auf, die mittels Lagern drehbar gelagert ist, von denen jeweils eines an dem A-seitigen und an dem B-seitigen Lagerschild angebunden ist. An der Welle ist ein Rotorpaket befestigt, das Permanentmagneten umfasst, mittels derer der Rotor in eine Rotationsbewegung versetzt wird. Hierfür wirken die mittels der Magneten des Rotors erstellten Magnetfelder mit geeigneten Magnetfeldern des Stators zusammen.

Aus DE 10 2012 004 287 A1 ist ein Getriebeaktuator mit einem Elektromotor bekannt. Ein Statorgehäuse ist aus einem Metall erstellt, und eine Lasche ist an diesem angeformt, an der eine Masseleitung angeschlossen ist.

Aus DE 10 2013 215 949 A1 ist ein Elektromotor bekannt, der beispielsweise ein Bestandteil eines Kupplungsaktuators ist. Die Motorphasen sind beispielsweise mittels Crimp-Technik mit Schneidklemmen verbunden.

Aus DE 10 2011 004 919 A1 ist ein Verbindungselement bekannt, das zwischen einem Motor und einer Steuereinheit eingesetzt werden soll. Hierbei handelt es sich um eine Schnittstelle, die die mechanischen und elektronischen Komponenten verbindet.

Aus DE 10 20009 001 948 A1 ist ein Lagerschild eines Lenkungsmotors bekannt, das einstückig aus einem Kunststoffmaterial hergestellt ist. Hinsichtlich elektrischer Anschlüsse findet sich nichts.

Aus US 2010/0120543 A1 ist ein kombinierter Vorspannring bekannt, mittels dessen ein Lager axial vorgespannt wird, und mittels dessen in radialer Richtung etwaige Toleranzen ausgeglichen werden. Der kombinierte Vorspannring ist beispielsweise aus einem Metall erstellt.

Der Erfindung liegt die Aufgabe zugrunde, eine besonders geeignete elektrische Maschine mit einem eine elektrische Spule aufweisenden Stator sowie einen Getriebeaktuator mit einer elektrischen Maschine anzugeben, wobei insbesondere eine Baugröße und/oder Herstellungskosten verringert und vorzugsweise eine Herstellung vereinfacht ist.

Hinsichtlich der elektrischen Maschine wird diese Aufgabe durch die Merkmale des Anspruchs 1 und hinsichtlich des Getriebeaktuators durch die Merkmale des Anspruchs 10 erfindungsgemäß gelöst. Vorteilhafte Weiterbildungen und Ausgestaltungen sind Gegenstand der jeweiligen Unteransprüche.

Die elektrische Maschine ist bevorzugt ein Elektromotor, der zweckmäßigerweise bürstenlos ausgeführt ist. Unter elektrischer Maschine wird folglich insbesondere ein bürstenloser Elektromotor (Gleichstrommotor) oder eine Synchronmaschine, jedoch auch ein Generator verstanden. Die elektrische Maschine ist geeigneterweise ein Bestandteil eines Kraftfahrzeugs und bevorzugt ein Elektromotor, insbesondere ein bürstenloser Elektromotor, vorzugsweise ein bürstenloser Gleichstrommotor (BLDC). Beispielsweise dient der Elektromotor dem Antrieb des Kraftfahrzeugs, welches somit insbesondere ein Elektrofahrzeug oder ein Hybridfahrzeug ist.

Bevorzugt jedoch ist die elektrische Maschine ein Bestandteil eines Nebenaggregats des Kraftfahrzeugs, beispielsweise eines Verstellantriebs, wie eines Lenkungsmotors einer sog. Servolenkung. Der Verstellantrieb ist Bestandteil des Kraftfahrzeugs und weist ein Verstellteil sowie eine Antriebseinheit auf. Der Verstellantrieb ist beispielsweise eine elektromotorische Sitzverstellung, ein elektromotorisch betriebenes Seitenfenster oder ein elektromotorisch betriebenes Schiebedach. In diesem Fall ist das Verstellteil ein Sitz, eine Teil eines Sitzes, eine Fensterscheibe bzw. das Schiebedach. In einer Alternative hierzu ist der Verstellantrieb eine elektromotorisch betriebene Tür, und das Verstellteil ist die Tür. Alternativ ist die Verstelleinrichtung eine elektromotorisch betriebene Heckklappe. Mit anderen Worten wird als Verstellteil die Heckklappe mittels der Antriebseinheit in eine geöffnete und/oder geschlossene Position verschwenkt. In einer bevorzugten Ausführungsform betätigt der Elektromotor einen Bestandteil eines zumindest teilweise automatisierten Getriebes des Kraftfahrzeugs. Mit anderen Worten ist der Elektromotor ein Bestandteil eines Getriebeaktuators ("Drive Train Actuator", DTA).

Die elektrische Maschine umfasst einen Stator mit einer elektrischen Spule, die insbesondere aus einem lackierten Kupferdraht oder aus einem lackierten Aluminiumdraht erstellt ist, und die bei Betrieb der Erzeugung eines Magnetfelds dient. Geeigneterweise umfasst der Stator eine Anzahl derartiger elektrischer Spulen, wobei die elektrischen Spulen insbesondere auf eine Anzahl von Feldwicklungen oder Phasenwicklungen aufgeteilt sind. Jede dieser Feld- bzw. Phasenwicklungen umfasst folglich eine bestimmte Anzahl an elektrischen Spulen, wobei die Anzahl vorzugsweise gleich ist. Die Feld- bzw. Phasenwicklungen sind insbesondere in einer Dreiecks- oder Sternschaltung miteinander verschaltet. Beispielsweise weist der Stator ein Statorblechpaket auf, das eine Anzahl in eine Axialrichtung übereinander und gegeneinander elektrisch isolierter Bleche umfasst, wobei die elektrische Spule insbesondere um zumindest einen Teil des Statorblechpakets gewickelt ist.

Die elektrische Maschine umfasst einen Rotor mit einer Welle, der drehbar um eine Rotationsachse gelagert ist. Die Rotationsachse ist parallel zur Axialrichtung. An der Welle ist beispielsweise ein Rotorblechpaket angebunden, welches aus in Axialrichtung übereinander gestapelter und gegeneinander elektrisch isolierter Rotorbleche besteht. An dem Rotorblechpaket ist bevorzugt ein Permanentmagnet, insbesondere eine Anzahl an Permanentmagneten angebunden, beispielsweise an dessen Umfang festgelegt oder in etwaigen Taschen vergraben. Der Rotor, zumindest das Rotorblechpaket, sofern dieses vorhanden ist, wird umfangsseitig von dem Stator umgeben, der insbesondere hohlzylindrisch ausgestaltet ist. Mit anderen Worten handelt es sich um einen Innenläufer.

Der Rotor ist mittels eines Lagers, vorzugsweise zweier Lager, drehbar gelagert. Hierbei ist eines der Lager ein A-seitiges und das verbleibende ein B-seitiges Lager, wobei ein antreibendes oder anzutreibendes Bauteil insbesondere an einem Ende der Welle angebunden ist, welches sich auf Seiten des A-seitigen Lagers befindet. Die Lager sind beispielsweise Kalotten oder Wälzlager, vorzugsweise Kugellager. Das B-seitige Lager ist an einem B-seitigen Lagerschild angebunden, welches den Stator stirnseitig abdeckt. Vorzugsweise ist das B-seitige Lagerschild mechanisch an dem Stator angebunden, beispielsweise befestigt, oder zumindest in direktem mechanischem Kontakt mit diesem. Das B-seitige Lagerschild weist ferner einen elektrischen Anschluss auf, an dem ein Ende der elektrischen Spule festgelegt und mit diesem elektrisch kontaktiert ist. Mit anderen Worten ist das Ende der elektrischen Spule an dem elektrischen Anschluss befestigt, und das Ende der elektrischen Spule ist mit dem elektrischen Anschluss elektrisch kontaktiert. Insbesondere erfolgt dies an einer einzigen definierten Stelle.

Somit dient das B-seitige Lagerschild sowohl dem Halten des B-seitigen Lagers als auch der Bereitstellung eines elektrischen Anschlusses, der mit der elektrischen Spule elektrisch kontaktiert ist, und mittels dessen folglich eine Bestromung der elektrischen Spule ermöglicht ist. Folglich vereint das B-seitige Lagerschild zwei Funktionen auf sich, weswegen weniger Bauteile benötigt sind, was einerseits eine Baugröße, insbesondere eine axiale Höhe, verringert sowie Herstellungskosten reduziert. Auch ist eine Montage vereinfacht, da lediglich das B-seitige Lagerschild geeignet zu dem Stator ausgerichtet werden muss. Eine zusätzliche Ausrichtung eines etwaigen Verschaltungsrings bezüglich des B-seitigen Lagerschilds und/oder des Stators kann somit entfallen.

Insbesondere erfolgt die Verschaltung der einzelne Feld- bzw. Phasenwicklungen zu der Dreiecks- bzw. Sternschaltung mittels des B-seitigen Lagerschilds sowie des elektrischen Anschlusses. Vorzugsweise umfasst das B-seitige Lagerschild genauso viele elektrische Anschlüsse wie die elektrische Maschine Feld- bzw. Phasenwicklungen umfasst. Hierbei ist bei einer Sternschaltung jeweils eine der Feld- bzw. Phasenwicklungen einem der elektrischen Anschlüsse zugeordnet, bei einer Dreiecksschaltung sind jeweils zwei Feld- bzw. Phasenwicklungen einem der elektrischen Anschlüsse zugeordnet, wobei jeder Feld- bzw. Phasenwicklung zwei der elektrischen Anschlüsse zugeordnet sind. Eines der Enden der Feld- bzw. Phasenwicklung wird hierbei mittels des Endes einer der elektrischen Spulen gebildet.

Das B-seitige Lagerschild weist eine Tasche auf, in die der elektrische Anschluss gepresst ist. Mit anderen Worten ist zwischen der Tasche und dem elektrischen Anschluss ein Pressfit erstellt. Hierbei umfasst die Tasche insbesondere eine Aussparung/einen Schlitz, innerhalb derer das Ende der Spule einliegt, was dieses folglich stabilisiert. Die Tasche verläuft vorzugsweise in Axialrichtung, und der elektrische Anschluss wird vorzugsweise zur Montage in Axialrichtung in die Tasche eingeführt. Beispielsweise steht der elektrische Anschluss in Axialrichtung über die Tasche über, was eine Montage sowie eine Demontage erleichtert. Insbesondere umfasst das B-seitige Lagerschild eine Anzahl derartiger Taschen, wobei zweckmäßigerweise jeder der Taschen ein elektrischer Anschluss zugeordnet ist. Beispielsweise sind die Taschen drehsymmetrisch bezüglich der Rotationsachse angeordnet.

Zweckmäßigerweise befindet sich die Tasche auf der dem Stator abgewandten Seite des B-seitigen Lagerschilds, was eine elektrische Kontaktierung des elektrischen Anschlusses mit weiteren Elementen vereinfacht sowie einen Kurzschluss zwischen dem elektrischen Anschluss und dem Stator vermeidet. Hierbei ist das Ende der Spule vorzugsweise durch eine Öffnung innerhalb des B-seitigen Lagerschilds geführt und beispielsweise mittels eines Halteelements auf dieser Seite gehalten und/oder mittels eines Führungselements zu der Tasche und/oder dem elektrischen Anschluss geführt. Insbesondere erfolgt die Festlegung und elektrische Kontaktierung des Endes der Spule mit dem elektrischen Anschluss innerhalb der Tasche, sodass die Verbindung zwischen der elektrischen Spule und dem elektrischen Anschluss mittels der Tasche stabilisiert ist. Hierbei ist ein etwaiges Ablösen der elektrischen Spule von dem elektrischen Anschluss aufgrund des mittels des Pressfits erstellten Kraftschlusses zwischen der Tasche und dem elektrischen Anschluss unterbunden.

Das B-seitige Lagerschild umfasst bevorzugt einen zentralen Metallring, der beispielsweise aus einem Blech gestanzt und/oder tiefgezogen ist. Beispielsweise ist der Metallring aus einem Aluminium oder einem Eisen gefertigt. Insbesondere ist der Metallring einstückig gefertigt. Ferner weist das B-seitige Lagerschild einen Kunststoffträger auf, in den der Metallring eingebettet ist. Insbesondere wird zur Herstellung des B-seitigen Lagerschilds der Metallring mittels des den späteren Kunststoffträger bildenden Kunststoffs umspritzt. Der Kunststoff ist beispielsweise glasfaserverstärktes Polyamid, glasfaserverstärktes Polypropylen (PP) oder ein sonstiges glasfaserverstärktes Thermoplast. Eine Glasfaserverstärkung kann auch entfallen. Mit anderen Worten handelt es sich bei dem Kunststoff um ein Polyamid (PA), Polypropylen (PP) oder ein sonstiges Thermoplast. Insbesondere ist die Ausdehnung des Kunststoffträgers in Radialrichtung, also senkrecht zur Axialrichtung, größer als die des Metallrings. Vorzugsweise weist der Metallring höchstens einen Durchmesser von 50%, 40% oder 30% des Durchmessers des B-seitigen Lagerschilds auf, was das Gewicht des B-seitigen Lagerschilds sowie dessen Herstellungskosten reduziert.

Insbesondere ist der Metallring vollständig von dem Kunststoff umgeben, was diesen vor einer etwaigen Korrosion schützt sowie diese stabilisiert. Mittels des Metallrings wird vorzugsweise das B-seitige Lager gehalten, und der Metallring umgibt vorzugsweise das B-seitige Lager, weswegen das B-seitige Lager mittels des Metallrings stabilisiert ist. Hierbei liegt der Metallring nicht direkt an dem B-seitigen Lager an, sondern lediglich mittelbar über dem Kunststoffträger, was eine Beschädigung bei einer Montage vermeidet. Insbesondere ist der Metallring von dem Stator beabstandet, wobei der Abstand insbesondere größer oder gleich 0,5 cm oder 1 cm ist. Insbesondere ist der Metallträger mittels des Kunststoffträgers überzogen, wobei die Dicke des Kunststoffträgers in diesem Bereich insbesondere geringer als 0,5 cm, 0,4 cm, 0,3 cm oder 0,2 cm ist. Beispielsweise ist die Dicke des Kunststoffträgers in diesem Bereich 1 mm. Beispielsweise umfasst der Kunststoffträger die Tasche, die insbesondere mittels Spritzgusserstellung hergestellt ist. Vorzugsweise besteht das B-seitige Lagerschild aus dem Metallring sowie dem Kunststoffträger als auch dem elektrischen Anschluss bzw. der elektrischen Anschlüsse, sofern die elektrische Maschine eine Anzahl derartiger elektrischer Anschlüsse aufweist. Auf diese Weise sind Herstellungskosten reduziert. Die Ausgestaltung des B-seitigen Lagerschildes mittels des Metallrings, der in dem Kunststoffträger eingebettet ist, ist unabhängig von der Tasche und wird insbesondere als eigenständige Erfindung erachtet.

Insbesondere ist der Metallring hohlzylindrisch ausgestaltet, wobei die Achse geeigneterweise parallel zur Rotationsachse ist. Zum Beispiel ist der Metallring konzentrisch zur Rotationsachse angeordnet. Geeigneterweise weist der Metallring an einem Axialende einen radial nach innen weisenden Kragen auf, wobei dieser Kragen sich vorzugsweise an dem dem Stator zugewandten Axialende des Metallrings befindet. Mittels dieses Kragens wird insbesondere das B-seitige Lager in Axialrichtung an einer Bewegung zum Stator hin gehindert. Alternativ oder in Kombination hierzu dient der Kragen der Aufnahme und/oder Befestigung eines Federelements zur axialen Vorspannung des B-seitigen Lagers.

Vorzugsweise weist der Metallring eine radial nach außen weisende Lasche auf, die insbesondere an ein Axialende des hohlzylindrischen Metallrings angeformt ist, und die beispielsweise streifen- bzw. rechteckförmig ausgestaltet ist. Zweckmäßigerweise wird das radiale Ende des Metallrings mittels der Lasche gebildet. Die Lasche befindet sich bevorzugt in Axialrichtung unterhalb der Tasche. Zweckmäßigerweise wird die Tasche in Axialrichtung mittels der Lasche überdeckt, zumindest jedoch überlappen diese in einem bestimmten Bereich. Folglich wird bei einem Einführen des elektrischen Anschlusses in die Tasche der Kunststoffträger mittels der Lasche des Metallrings stabilisiert, was eine Beschädigung des B-seitigen Lagerschilds vermeidet. Da das B-seitige Lagerschild in weiteren Teilen von dem Metallring frei ist, sind Gewicht und Herstellungskosten reduziert. Insbesondere umfasst der Metallring eine Anzahl derartiger Laschen, wobei tangential benachbarte Laschen zueinander beabstandet sind. Insbesondere sind die Laschen drehsymmetrisch bezüglich der Rotationsachsen angeordnet, und/oder jeder der Taschen ist eine der Laschen zugeordnet, sofern das B-seitige Lagerschild mehrere Taschen/elektrische Anschlüsse aufweist.

Beispielsweise ist an dem Metallring ein in Axialrichtung verlaufendes Gewinde angebunden, welches von dem Stator weg weist. Das Gewinde umfasst beispielsweise einen Stift, welcher umfangsseitig mit einer Helix versehen ist. Das Gewinde ist vorzugsweise aus einem Metall erstellt, beispielsweise einem Stahl oder dem gleichen Material wie der Metallring. Insbesondere ist das Gewinde einstückig mit dem Metallring. Das Gewinde ist insbesondere ein Außengewinde. Das Gewinde ist beispielsweise mittels einer Schraube gebildet. Das Gewinde durchstößt vorzugsweise den Kunststoffträger und ist folglich nicht mittels des Kunststoffs umgeben. Insbesondere ist das Gewinde an dem Metallring befestigt, beispielsweise mit diesem verschweißt. Sofern das Gewinde ein Bestandteil einer Schraube ist, umfasst der Metallring zum Beispiel eine Öffnung, durch die die Schraube geführt ist. Der Schraubenkopf ist vorzugsweise auf der dem Stator zugewandten Seite des Metallrings angeordnet. An dem Gewinde ist insbesondere ein weiteres Bauteil der elektrischen Maschine anbindbar, wofür das weitere Bauteil mit dem Gewinde verschraubt wird.

Das weitere Bauteil weist beispielsweise ein weiteres Gewinde auf, welches mit dem Gewinde verschraubt wird. Alternativ hierzu wird das Gewinde durch eine Aussparung des weiteren Bauteils geführt, und endseitig wird eine Mutter auf das Gewinde aufgesetzt und verdreht. Insbesondere ist eine Elektronik an dem Gewinde anbindbar. Vorzugsweise ist die Elektronik an dem Gewinde angebunden. Die Elektronik weist beispielsweise ein Elektronikfach und/oder eine Leiterplatte auf. Beispielsweise ist die Leiterplatte direkt an dem Gewinde angebunden, oder das Elektronikfach ist an dem Gewinde angebunden. Die Elektronik selbst ist geeigneterweise elektrisch mit dem elektrischen Anschluss kontaktiert und dient der Bestromung der elektrischen Spule. Beispielsweise umfasst die Elektronik eine Brückenschaltung, beispielsweise eine B4-, B6- oder B12-Schaltung. Die Brückenschaltung umfasst bevorzugt Halbleiterschalter, beispielsweise Leistungshalbleiterschalter, wie IGBTs oder Feldeffekttransistoren (FET), wie MOSFETs. Das an dem Metallring in Axialrichtung verlaufende, von dem Stator wegweisende Gewinde ist unabhängig von der Ausgestaltung des B-seitigen Lagerschilds mit der Tasche und wird insbesondere als eigenständige Erfindung erachtet.

Der elektrische Anschluss umfasst einen Schneidklemmkontakt, in den das Ende der elektrischen Spule eingeführt ist. Zweckmäßigerweise ist der Schneidklemmkontakt U-förmig ausgestaltet. Der Schneidklemmkontakt weist vorzugsweise eine in Richtung des Stators zeigende Öffnung auf. Auf diese Weise erfolgt die elektrische Kontaktierung sowie die Festlegung des Endes der Spule mit dem elektrischen Anschluss in einem einzigen Arbeitsschritt. Zweckmäßigerweise verläuft der Schneidklemmkontakt in Axialrichtung, weswegen das Ende der Spule bei Montage in Axialrichtung in den Schneidklemmkontakt eingeführt wird. Auf diese Weise ist eine Montage vereinfacht. Zweckmäßigerweise umfasst das B-seitige Lagerschild hierbei die Tasche, die zweckmäßigerweise einen Schlitz umfasst, innerhalb dessen das Ende der elektrischen Spule eingelegt ist. Bei Montage wird zunächst das Ende der elektrischen Spule in den Schlitz eingelegt und/oder über eine Öffnung oder zumindest teilweise eine Öffnung der Tasche gespannt. Im Anschluss hieran wird zweckmäßigerweise der elektrische Anschluss in Axialrichtung in die Tasche eingeführt, wobei das Ende der elektrischen Spule in den Schneidklemmkontakt eingeführt wird. Bei einem Pressen des elektrischen Anschlusses in die Tasche wird die Oberfläche des Endes der elektrischen Spule mittels des Schneidklemmkontakts geöffnet und der elektrische Anschluss mit der elektrischen Spule elektrisch kontaktiert.

Zweckmäßigerweise umfasst der elektrische Anschluss einen in Axialrichtung verlaufenden Klemmkontakt, mit dem ein weiterer Kontakt verklemmbar ist. Zweckmäßigerweise ist der Klemmkontakt im Wesentlichen U-förmig ausgestaltet. Der Klemmkontakt umfasst insbesondere eine von dem Stator wegzeigende Öffnung. Der weitere Kontakt ist insbesondere ein Elektronikkontakt der Elektronik, sofern diese vorhanden ist. Zweckmäßigerweise ist im Montagezustand der Klemmkontakt mit dem Elektronikkontakt verklemmt. Insbesondere ist der weitere Kontakt bzw. der Elektronikkontakt ein Messerkontakt, und der Klemmkontakt ist ein hierzu korrespondierender Gabelkontakt.

Zweckmäßigerweise sind der Schneidklemmkontakt und der Klemmkontakt im Wesentlichen U-förmig ausgestaltet. Vorzugsweise befinden sich die Öffnungen des Schneidklemmkontakts und des Klemmkontakts auf gegenüberliegenden Seiten des elektrischen Anschlusses. Der Schneidklemmkontakt weist vorzugsweise eine in Richtung des Stators zeigende Öffnung und der Klemmkontakt eine von dem Stator wegzeigende Öffnung auf. Insbesondere ist der Schneidklemmkontakt bezüglich des Klemmkontakts senkrecht zur Axialrichtung versetzt. Mit anderen Worten überdecken sich der Klemmkontakt und der Schneidklemmkontakt in Axialrichtung nicht. Vorzugsweise überdecken sich der Schneidklemmkontakt und der Klemmkontakt senkrecht zur Axialrichtung zumindest teilweise. Mit anderen Worten befindet sich bei einer Projektion des Schneidklemmkontakts auf den Klemmkontakt das untere Ende des Schneidklemmkontakts zumindest teilweise innerhalb des Klemmkontakts.

Auf diese Weise ist eine Ausdehnung des elektrischen Anschlusses in Axialrichtung verringert, was eine Baugröße der elektrischen Maschine weiter verringert. Beispielsweise ist der Klemmkontakt bezüglich des Schneidklemmkontakts radial nach innen versetzt, was eine elektrische Kontaktierung sowohl der elektrischen Spulen mit dem elektrischen Anschluss als auch der Elektronik mit dem elektrischen Anschluss vereinfacht. Der elektrische Anschluss, der einen in eine Vorzugsrichtung verlaufenden Schneidklemmkontakt und einen in die Vorzugsichtung verlaufenden Klemmkontakt umfasst, wobei der Schneidklemmkontakt bezüglich des Klemmkontakts senkrecht zur Vorzugsrichtung versetzt ist, ist unabhängig von der Ausgestaltung des B-seitigen Lagerschilds sowie von der elektrischen Maschine und wird insbesondere als eigenständige Erfindung betrachtet. Die Vorzugsichtung entspricht insbesondere der Einführrichtung eines Drahtes oder eines sonstigen Bauteils in den Schneidklemmkontakt bzw. den Klemmkontakt.

Besonders bevorzugt ist der elektrische Anschluss einstückig ausgestaltet und vorzugsweise aus einem Blech gefertigt. Zweckmäßigerweise besteht der elektrische Anschluss aus dem Blech. Dies erlaubt eine Herstellung des elektrischen Anschlusses als Stanzteil, was die Herstellungskosten verringert. Alternativ oder besonders bevorzugt in Kombination hierzu weist der elektrische Anschluss eine Biegekante auf, die in Axialrichtung verläuft. Insbesondere handelt es sich bei dem elektrischen Anschluss um ein Stanzbiegeteil. Aufgrund der Biegekante weist der Querschnitt des elektrischen Anschlusses senkrecht zur Axialrichtung zwei Schenkel auf, zwischen denen ein Winkel gebildet ist, der insbesondere zwischen 45° und 135°ist. Besonders bevorzugt ist der Winkel im Wesentlichen gleich 90°, weswegen der elektrische Anschluss einen im Wesentlichen L-förmigen Querschnitt senkrecht zur Axialrichtung aufweist. Auf diese Weise ist eine Stabilität des elektrischen Anschlusses erhöht, was eine Montage vereinfacht. Beispielsweise ist lediglich einer der Schenkel innerhalb der Tasche angeordnet, sofern diese vorhanden ist. Besonders bevorzugt befindet sich die Biegekante zwischen dem Schneidklemmkontakt und dem Klemmkontakt. Mit anderen Worten weist einer der Schenkel den Klemmkontakt und der verbleibende Schenkel den Schneidklemmkontakt auf. Infolgedessen ist eine Montage weiter vereinfacht.

Zweckmäßigerweise weist das B-seitige Lagerschild umfangsseitig einen in Axialrichtung verlaufenden Kragen auf. Der Kragen ist insbesondere hohlzylindrisch ausgestaltet, wobei dessen Achse parallel zur Rotationsachse ist, und insbesondere mit dieser zusammenfällt. Zweckmäßigerweise bildet der Kragen ein Axialende des B-seitigen Lagerschilds. Vorzugsweise ist der Kragen frei von dem Metallring, sofern dieser vorhanden ist. Besonders bevorzugt bildet der Kragen ein radial äußeres Ende des B-seitigen Lagerschilds. Der Kragen ist insbesondere auf den Stator aufgesetzt, der geeigneterweise stirnseitig eine Fase aufweist. Mit anderen Worten ist der Radius des Stators stirnseitig verringert. Hierbei sitzt der Kragen zweckmäßigerweise auf der Fase auf und übergreift und umgreift somit zum Teil den Stator. Zweckmäßigerweise fluchtet der Kragen umfangsseitig mit dem Stator in dem Bereich, in dem die Fase nicht vorhanden ist, was eine radiale Ausdehnung verringert. Der Kragen ist an dem Stator angebunden. Folglich ist mittels der Fase eine Zentrierhilfe für das B-seitige Lagerschild sowie eine definierte Auflagefläche gegeben, was eine Montage vereinfacht. Bevorzugt ist der Kragen mit dem Stator verschweißt, insbesondere laserverschweißt, was eine vergleichsweise stabile Verbindung zwischen dem B-seitigen Lagerschild und dem Stator schafft. Dies kann auch automatisiert erfolgen, weswegen Herstellungskosten weiter reduziert sind.

Die elektrische Maschine weist vorzugsweise ein A-seitiges Lagerschild auf, welches beispielsweise deckelförmig ausgestaltet ist. Hierbei ist der Stator vorzugsweise stirnseitig mittels des A-seitigen Lagerschilds abgedeckt, und insbesondere ist das A-seitige Lagerschild an dem Stator befestigt. Der Stator befindet sich zwischen dem B-seitigen Lagerschild und dem A-seitigen Lagerschild. An dem A-seitigen Lagerschild ist insbesondere das A-seitige Lager angebunden, vorzugsweise befestigt, und die Welle des Rotors ist auch mittels dieses Lagers geeigneterweise drehbar gelagert. Auf diese Weise ist die Welle vergleichsweise stabil gelagert. Das A-seitige Lager ist vorzugsweise einstückig aus einem Kunststoff gefertigt, wobei der Kunststoff beispielsweise Polyamid (PA), Polypropylen (PP) oder ein sonstiges Thermoplast ist, welches vorzugsweise faserverstärkt, beispielsweise glasfaserverstärkt ist. Insbesondere ist das A-seitige Lagerschild mittels Kunststoffspritzgießen erstellt und folglich ein Spritzgussteil. Auf diese Weise sind Herstellungskosten reduziert.

Geeigneterweise weist das A-seitige Lagerschild eine zentrale topfförmige Vertiefung auf, innerhalb derer zumindest teilweise das A-seitige Lager angeordnet ist. Auf diese Weise ist das A-seitige Lager stabil gehalten oder zumindest eine übermäßige Bewegung des Lagers ist unterbunden. Zweckmäßigerweise ist die Öffnung der topfförmigen Vertiefung von dem Stator weggerichtet, weswegen zur Montage das A-seitige Lager von der dem Stator gegenüberliegenden Seite des A-seitigen Lagerschilds in die topfförmige Vertiefung eingeführt werden kann. Die topfförmige Vertiefung weist vorzugsweise zentral im Bereich eines Topfbodens eine Aussparung auf, durch die die Welle des Rotors ragt. Geeigneterweise umfasst der Topfboden ein Vorspannelement, mittels dessen das A-seitige Lager axial vorgespannt ist, also in Axialrichtung. Hierbei wirkt das Vorspannelement zweckmäßigerweise auf einen Außenring des A-seitigen Lagers, sofern dieses ein Wälzlager mit einem Außenring, einem Innenring und dazwischen angeordneten Wälzkörpern ist. Der Innenring ist zweckmäßigerweise an der Welle angebunden. Das Vorspannelement wird insbesondere beim Herstellungsprozess von weiteren Bestandteilen des A-seitigen Lagerschilds erstellt, insbesondere im Spritzgussverfahren, was Herstellungskosten senkt. Zweckmäßigerweise weist der Topfboden eine Anzahl derartiger Vorspannelemente auf, insbesondere zwischen zwei und fünf, und insbesondere drei derartige Vorspannelemente. Die Vorspannelemente sind zweckmäßigerweise drehsymmetrisch bezüglich der Rotationsachse angeordnet.

Beispielsweise weist das Vorspannelement beim Querschnitt senkrecht zur Rotationsachse einen C-förmigen Querschnitt auf, wobei eines der Enden des Vorspannelements an weiteren Bestandteilen des Topfbodens angebunden/angeformt ist. Insbesondere ist mittels der Anbindung ein Filmscharnier gebildet. Das verbleibende Freiende reicht durch eine Aussparung innerhalb des Topfbodens hindurch. Insbesondere wird bei Einsetzen des A-seitigen Lagers das Vorspannelement um das an den weiteren Bestandteilen des Topfbodens angebundene Ende (Filmscharnier) verschwenkt, was zu einer Bereitstellung einer elastischen Kraft führt. Mittels dieser wird das A-seitige Lager in Axialrichtung vorgespannt. In einer Alternative hierzu sind beide Freienden des C-förmigen Vorspannelements mit weiteren Bestandteilen des Topfbodens verbunden, und insbesondere an diesen angebunden. Zweckmäßigerweise weist der bogenförmige Abschnitt von dem Stator weg. Mit anderen Worten ist der Topfboden im Bereich des Vorspannelements von dem Stator weg ausgewölbt. Mittels elastischer Verbiegung des bogenförmigen Abschnitts des Vorspannelements wird hierbei die Kraft zur Vorspannung des A-seitigen Lagers in Axialrichtung bereitgestellt.

Zusammenfassend weist die elektrische Maschine bevorzugt keine metallischen Lagerschilde auf. Das A- und/oder B-seitige Lagerschild, insbesondere der Kunststoffträger, ist zweckmäßigerweise an dem Stator befestigt, bevorzugt an einem Isolationsstern des Stators, welcher zweckmäßigerweise aus einem Kunststoff gefertigt ist. Der Außendurchmesser des A- und/oder B-seitigen Lagerschilds ist zweckmäßigerweise kleiner oder höchstens gleich dem maximalen Außendurchmesser des Stators. Vorteilhafterweise sind die miteinander verbundenen Teile des Stators, insbesondere die Isolationssterne, und die Teile des A- bzw. B-seitigen Lagerschilds (Kunststoffträger) aus einem Kunststoff gefertigt und vorzugsweise mittels Laserverschweißen aneinander befestigt, was auch in einem beengten Bauraum durchgeführt werden kann. Der Außendurchmesser der elektrischen Maschine ist insbesondere der gleiche wie der Außendurchmesser des Stators. Mit anderen Worten wird der Außendurchmesser der elektrischen Maschine nur durch den Stator definiert und somit durch die elektromagnetische Auslegung der elektrischen Maschine. Mechanische Befestigungselemente wie das Lagerschild haben keinen Einfluss auf den Außendurchmesser der elektrischen Maschine. Beispielsweise sind in das A- und/oder B-seitige Lagerschild, insbesondere in den Kunststoffträger, weitere Funktionselemente mit eingespritzt, wie eine metallische Aufnahme eines Kugellagers, Befestigungsschrauben usw.

Das A-seitige Lagerschild nimmt bevorzugt ein A-seitiges (Los-)lager auf. Das Kugellager des A-Loslagers ist insbesondere zusätzlich in einem Anbauteil gelagert. Somit ist die mechanische Belastung des A-seitigen Lagerschildes relativ gering. Darum kann das A-seitige Lagerschild komplett aus Kunststoff ausgeführt werden. Geeigneterweise ist das A-seitige Lagerschild mit dem etwaigen Isolationsstern des Stators verschweißt, ohne dass der Außendurchmesser des Stators überschritten wird. Das A-seitige Lagerschild weist insbesondere das Vorspannelement auf, das zweckmäßigerweise die Funktion einer Wellscheibe aufweist. Die federnde Wirkung des Vorspannelements, das in das aus Kunststoff bestehende A-seitige Lagerschild integriert ist, ist mittels geeigneter Ausformung und/oder Wahl des Kunststoffs realisiert.

Die axiale Bauhöhe der elektrischen Maschine ist aufgrund des elektrischen Anschlusses reduziert. Bei diesem sind der Schneidklemmkontakt und der Klemmkontakt nebeneinander anordnet, was Bauhöhe spart.

Zusammenfassend ist daher die axiale und radiale Baugröße der elektrischen Maschine verringert, insbesondere aufgrund der Ausgestaltung der Lagerschilde (radiale Baugröße) und aufgrund der Ausgestaltung des elektrischen Anschlusses (axiale Baugröße).

Der Getriebeaktuator des Kraftfahrzeugs dient dem Auswählen eines bestimmten Übersetzungsverhältnisses eines Getriebes des Kraftfahrzeugs, wobei über das Getriebe eine Hauptantriebsmaschine des Kraftfahrzeugs, insbesondere eine Verbrennungskraftmaschine, mit Antriebsrädern des Kraftfahrzeugs in Wirkverbindung steht. Beispielsweise wird ein sogenannter Schaltfinger von mindestens einem Elektromotor angetrieben, mittels dessen die einzelnen Schaltstufen des Getriebes eingestellt werden. Zum Beispiel weist der Getriebeaktuator zwei Elektromotoren auf, wobei mittels eines von diesen die Schaltbewegung und mittels des anderen die Bewegung zum Auswählen der sogenannten Ganggasse ausgeführt wird. Zweckmäßigerweise wird mittels des Elektromotors zwischen einer Vorwärtsbewegung und einer Rückwärtsbewegung des Kraftfahrzeugs umgeschaltet. Alternativ oder in Kombination hierzu wird eine Kupplung von dem Elektromotor betätigt.

Zumindest einer der Elektromotoren weist einen Stator mit einer elektrische Spule auf, der mit einem B-seitigen Lagerschild stirnseitig abgedeckt ist, wobei das B-seitige Lagerschild einen elektrischen Anschluss aufweist, an dem ein Ende der elektrischen Spule festgelegt und mit diesem elektrisch kontaktiert ist. Auf diese Weise ist eine axiale Baugröße verringert. Da ferner vergleichsweise wenige Bauteile zur Kontaktierung einer Elektronik mit der elektrischen Spule erforderlich sind, sind ferner Herstellungskosten verringert, und eine Herstellung ist vereinfacht.

Nachfolgend werden Ausführungsbeispiele der Erfindung anhand einer Zeichnung näher erläutert. Darin zeigen:
- Fig. 1: schematisch vereinfacht einen Antriebstrang eines Kraftfahrzeugs,
- Fig. 2: einen Elektromotor in einer Schnittdarstellung,
- Fig. 3: perspektivisch den Elektromotor mit einem B-seitigen Lagerschild,
- Fig. 4: gemäß Fig. 3 eine weitere Ausführungsform des B-seitigen Lagerschilds,
- Fig.5, 6: perspektivisch das B-seitige Lagerschild,
- Fig. 7, 8: jeweils eine Ausführungsform eines elektrischen Anschluss,
- Fig. 9: perspektivisch den Elektromotor mit einem A-seitigen Lagerschild, und
- Fig. 10: perspektivisch das A-seitige Lagerschild.

Einander entsprechende Teile sind in allen Figuren mit den gleichen Bezugszeichen versehen.

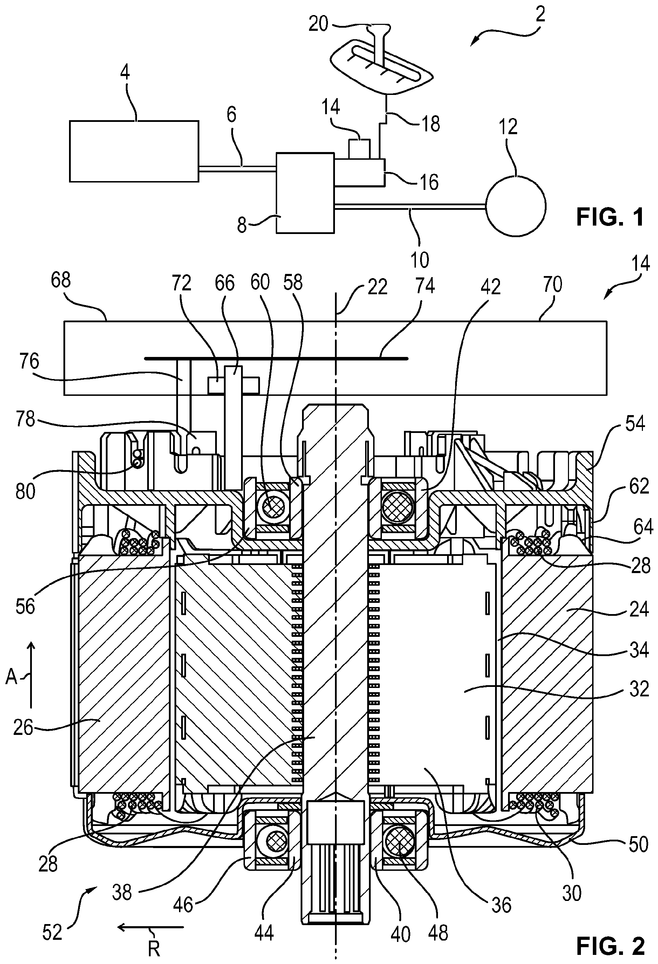

In Fig. 1 ist schematisch vereinfacht ein Antriebsstrang 2 eines Kraftfahrzeugs dargestellt. Eine Verbrennungskraftmaschine 4 steht über eine erste Welle 6, ein Getriebe 8, eine zweite Welle 10 und ein nicht gezeigtes Differential mit Antriebsrädern 12 in Wirkverbindung. Hierbei wird die Rotationsbewegung der direkt von der Verbrennungskraftmaschine 4 angetriebenen ersten Welle 6 in eine Rotationsbewegung der Antriebsräder 12 umgewandelt, wobei sich sowohl die Drehrichtung als auch die Rotationsgeschwindigkeiten der beiden unterscheiden. Aufgrund des Differentials erfolgt die Rotationsbewegung der Antriebsräder 12 im Wesentlichen in einem rechten Winkel zu der Rotationsbewegung der zweiten Welle 10.

Mittels des Getriebes 8 wird ein bestimmtes Übersetzungsverhältnis zwischen der ersten Welle 6 und der zweiten Welle 10 bestimmt. Ferner wird die Drehrichtung der zweiten Welle 10 mittels des Getriebes 8 eingestellt. Hierfür weist das Getriebe 8 eine Anzahl von sogenannten Schaltstufen auf, die mittels eines einen Elektromotor 14 umfassenden Getriebeaktuators 16 ausgewählt werden. Der Elektromotor 14 treibt hierfür ein Verstellteil des Getriebeaktuators 16 an, das wiederum in einer Wirkverbindung mit einem Auswahlmechanismus des Getriebes 8 steht. Der Getriebeaktuator 16 weist ferner eine nicht gezeigte Steuerelektronik auf, die den Elektromotor 14 steuert, und die über eine Datenleitung 18 von einem Wählhebel 20 eingestellt wird. Die Datenleitung 18 ist ein CAN-Bus, und mittels des Wählhebels 20 kann ein Fahrer die Bewegungsrichtung des Kraftfahrzeugs auswählen.

In Fig. 2 ist der Elektromotor 14 in einer Schnittdarstellung entlang dessen Rotationsachse 22 dargestellt. Der Elektromotor 14 weist einen hohlzylindrischen Stator 24 auf, der ein Statorblechpaket 26 umfasst, welches aus einer in Axialrichtung A, die parallel zur Rotationsachse 22 ist, übereinander gestapelter und gegeneinander elektrisch isolierter Blechlagen besteht. Das Statorblechpaket 26 umfasst einzelne in einer Radialrichtung R, also senkrecht zur Rotationsachse 22, verlaufende Zähne, die jeweils mittels einer elektrischen Spule 28 bewickelt sind. Der Elektromotor 14 umfasst somit eine Anzahl an elektrischen Spulen 28, die drehsymmetrisch um die Rotationsachse 22 verteilt sind, wobei die ein ganzzahliges Vielfaches von drei ist. Jeweils ein Drittel der elektrischen Spulen 28 ist zu einer Phasenwicklung 30 miteinander verschaltet.

Innerhalb des hohlzylindrisch ausgestalteten Stators 24 ist ein Rotorblechpaket 32 angeordnet, wobei zwischen dem Stator 24 und dem Rotorblechpaket 32 ein Luftspalt 34 ausgebildet ist. Das Rotorblechpaket 32 ist ebenfalls aus einzelnen in Axialrichtung A übereinander gestapelter und gegeneinander elektrisch isolierter Einzelbleche erstellt, und in dem Blechpaket 32 sind nicht näher dargestellte Permanentmagnete angeordnet, die ebenfalls drehsymmetrisch bezüglich der Rotationsachse 22 angeordnet sind. Das Rotorblechpaket 32 ist Bestandteil eines Rotors 36, der eine Welle 38 umfasst, an der das Rotorblechpaket 32 drehfest angebunden ist. Die Welle 38 ist konzentrisch zur Rotationsachse 22 angeordnet und mittels eine A-seitigen Lagers 40 sowie eines B-seitigen Lages 42 drehbar um die Rotationsachse 22 gelagert. Das A-seitige Lager 40 und das B-seitige Lager 42 sind jeweils Kugellager.

Das A-seitige Lager 40 weist somit einen Innenring 44 auf, der drehfest an der Welle 38 angebunden ist. Ferner umfasst das A-seitige Lager 40 einen Außenring 46 sowie zwischen dem Innenring 44 und dem Außenring 46 angeordnete Kugeln 48. Der Außenring 46 des A-seitigen Lagers 40 ist drehfest an einem A-seitigen Lagerschild 50 angebunden, das auf einer Antriebsseite 52 auf den Stator 24 aufgesetzt und an diesem befestigt ist. Die Ausdehnung des A-seitigen Lagerschilds 50 ist im Wesentlichen senkrecht zur Rotationsachse 22. Die Antriebsseite 52 ist dem Getriebe 8 zugewandt, und der auf diese Seite austretende Teil der Welle 38 ist an einem Schaltfinger des Getriebes mittelbar über weitere Bestandteile des Getriebeaktuators 16 angebunden.

Auf der verbleibenden Stirnseite des Stators 24 ist ein B-seitiges Lagerschild 54 aufgesetzt und an einem Stator 24 angebunden. Ein Außenring 56 des B-seitigen Lagers 42 ist drehfest an dem B-seitigen Lagerschild 54 angebunden und ein Innenring 58 des B-seitigen Lagers 42 ist an der Welle 38 befestigt. Zwischen dem Innenring 58 des B-seitigen Lagers 42 und dem Außenring 56 des B-seitigen Lagers 42 sind Kugeln 60 des B-seitigen Lagers 42 angeordnet. Das B-seitige Lagerschild 54 weist umfangsseitig einen in Axialrichtung A verlaufenden Kragen 62 auf, der mittels eines Hohlzylinders gebildet ist. Hierbei bildet der Kragen 62 die äußere Begrenzung des B-seitigen Lagerschilds 54 in Radialrichtung R. Der Kragen 62 weist auf den Stator 24 zu und ist freiendseitig auf eine stirnseitige Fase 64 des Stators 24 aufgesetzt. Die Fase 64 ist mittels einer Anspitzung des Statorblechpakets 26 gebildet, und der Stator 24 sowie der aus einem Kunststoff gefertigte Kragen 62 sind mittels Laserschweißen aneinander angebunden.

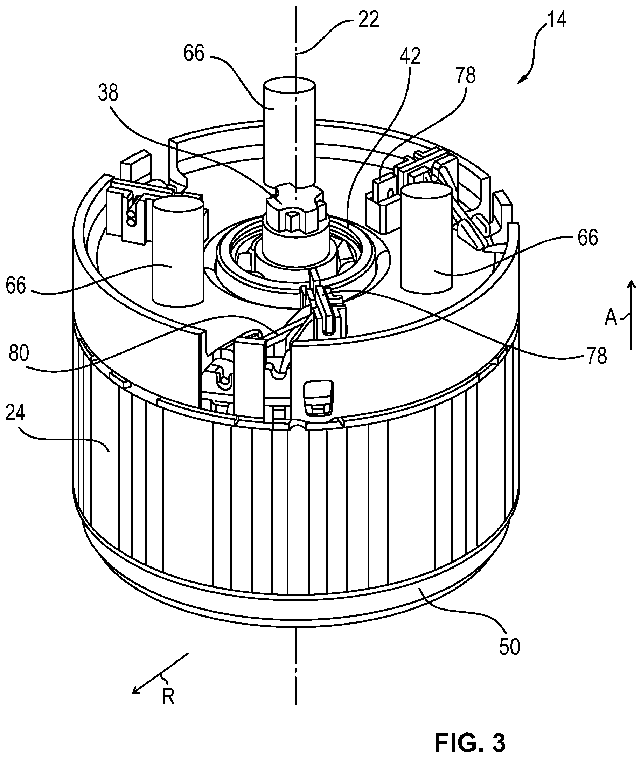

Das B-seitige Lagerschild 54 umfasst in einer Ausgestaltungsform der Erfindung drei Gewinde 66, die in Axialrichtung A verlaufen und von dem Stator 24 weggerichtet sind, wie in Fig. 3 dargestellt. Die Gewinde 66 sind drehsymmetrisch bezüglich der Rotationsachse 22 angeordnet, und in Fig. 2 ist lediglich eines dieser Gewinde 66 dargestellt. Mittels des Gewindes 66 ist eine Elektronik 68 an dem B-seitigen Lagerschild 54 befestigt, wobei das Gewinde 66 durch eine Aussparung eines Elektronikfachs 70 ragt und dort mittels einer Mutter 72 gehalten wird. Das Gewinde 66 sowie die Mutter 72 sind aus einem Stahl und das Elektronikfach 70 aus einem Kunststoff, wie Polyamid erstellt. Innerhalb des Elektronikfachs 70 ist eine Leiterplatte 74 angeordnet, mittels derer die Bestromung der Phasenwicklungen 30 erfolgt. Hierfür weist die Leiterplatte 74 eine nicht näher dargestellte Brückenschaltung, nämlich eine B6-Schaltung, mit einer Anzahl an Halbleiterschaltern auf, die MOSFETs sind.

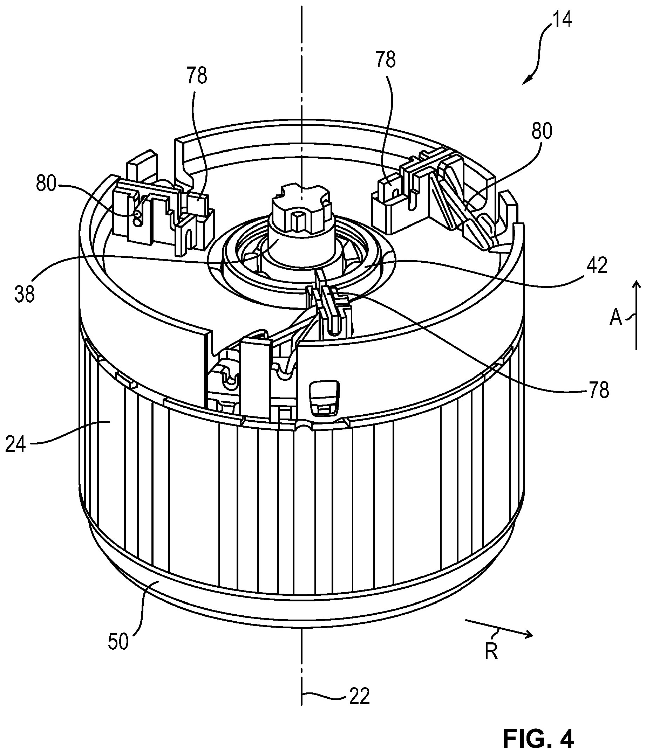

Durch das Elektronikfach 70 weist eine zur Anzahl der Phasenwicklungen 30 korrespondierende Anzahl an Elektronikkontakten 76, von denen hier wiederum lediglich ein einziger dargestellt ist. Der Elektronikkontakt 76 ist als ein sogenannter Messerkontakt ausgebildet. Der Elektronikkontakt 76 ist elektrisch mit der Leiterplatte 74, insbesondere der Brückenschaltung, sowie einem elektrischen Anschluss 78 des B-seitigen Lagerschilds 74 elektrisch kontaktiert. Das B-seitige Lagerschild 54 umfasst, wie in den Fig. 3 und 4 zu sehen ist, drei derartige elektrische Anschlüsse 78, die ebenfalls rotationssymmetrisch bezüglich der Rotationsachse 22 jeweils zwischen benachbarten Gewinden 66 angeordnet sind. Jeder elektrische Anschluss 78 ist mit zwei Enden 80 zweier elektrischer Spulen 28 elektrisch kontaktiert, die jeweils unterschiedlichen Phasenwicklungen 30 zugeordnet sind. Folglich sind die Phasenwicklungen 30 zu einer Dreiecksschaltung verschaltet. Hierbei werden die Enden 80 der elektrischen Spulen 28 mittels des jeweiligen elektrischen Anschlusses 78 gehalten, sodass diese an dem jeweiligen elektrischen Anschluss 78 festgelegt sind. Somit erfüllt das B-seitige Lagerschild 54 drei Funktionen, nämlich das Halten des B-seitigen Lagers 42 sowie die elektrischen Kontaktierung der Elektronik 68 mit den Phasenwicklungen 30 als auch die Verschaltung der einzelnen Phasenwicklungen 30 miteinander. Mit Ausnahme der Gewinde 66 entsprechen sich die in Fig. 3 und 4 dargestellten Varianten des Elektromotors 14.

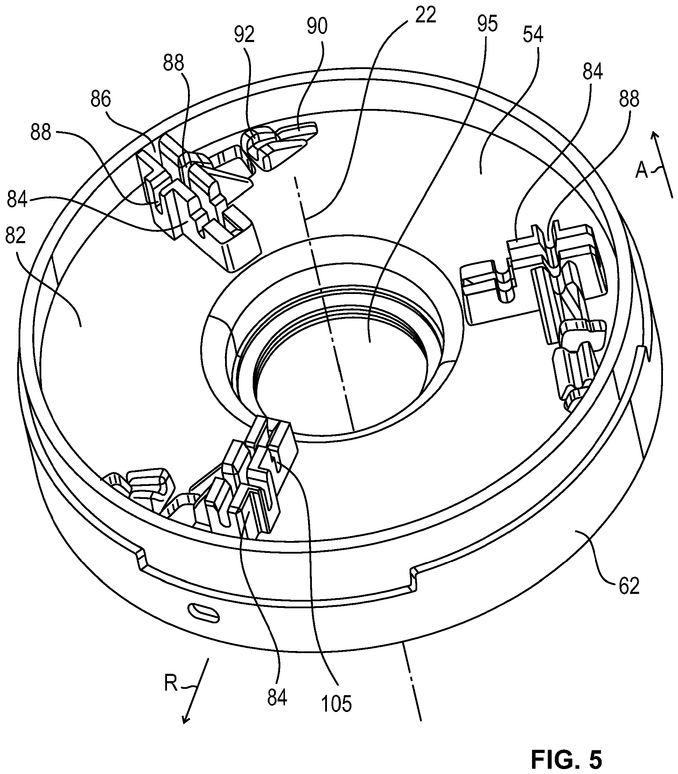

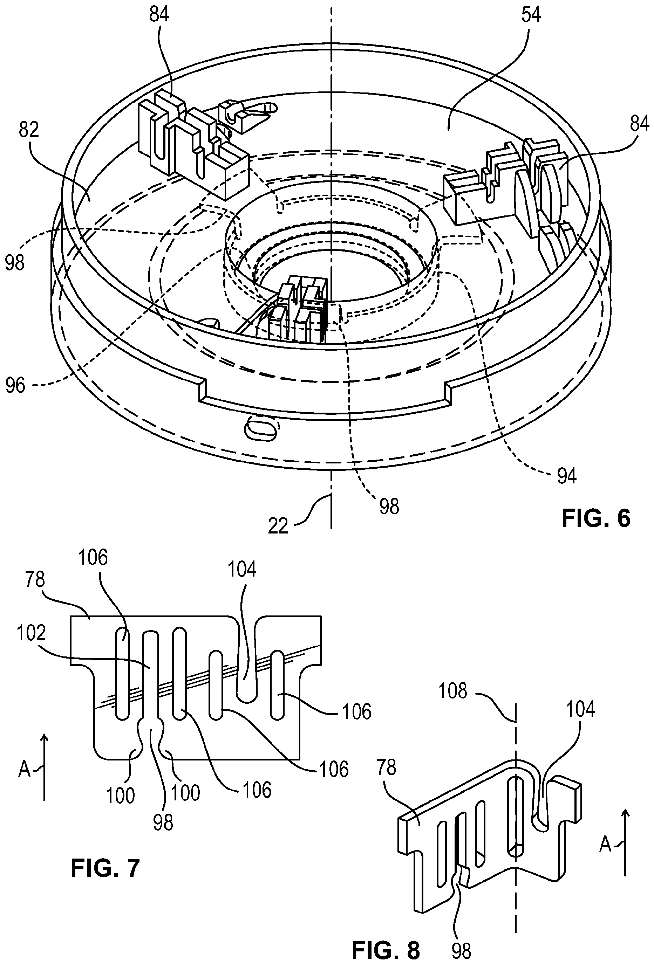

In Fig. 5 ist perspektivisch von der Elektronik 68 her gesehen, das B-seitige Lagerschild 54 und in Fig. 6 in einer transparenten Darstellung gezeigt. Das B-seitige Lagerschild 54 weist einen Kunststoffträger 82 auf, der den Kragen 62 sowie drei rotationssymmetrisch um die Rotationsachse 22 angeordnete und in Axialrichtung A verlaufende Taschen 84 umfasst. Die Taschen 84 sind gleichartig ausgestaltet und sind jeweils in Radialrichtung R ausgerichtet, wobei die Öffnung 86 jeweils von dem Stator 24 weggewandt ist. Jede der Taschen 84 weist zwei in Axialrichtung A verlaufende Schlitze 88 auf, die an der Öffnung 86 beginnen, und in die im Montagezustand die Enden 80 der elektrischen Spulen 28 eingelegt sind. Zwischen jeder Tasche 84 und einer hierzu in Tangentialrichtung versetzten und durch das B-seitige Lagerschild 54 vollständig hindurch reichenden Aussparung 90 des B-seitigen Lagerschilds 54 ist eine rampenartige Führungskontur 92 positioniert, mittels derer das Ende 80 der aus einem Kupferlackdraht erstellten elektrischen Spule 28 von der Aussparung 90 bis zu dem Schlitz 88 geführt wird. Im Montagezustand ragt das jeweilige Ende 80 der elektrischen Spule 28 durch die Aussparung 90 hindurch und wird mittels der Führungskontur 92 geführt, sodass das Ende 80 innerhalb der Schlitze 88 in jeweils einer der Taschen 84 einliegt. Das B-seitige Lagerschild 54 umfasst ferner einen zentralen Metallring 94, der innerhalb des Kunststoffträgers 82 eingebettet ist. Der Metallring 94 ist hohlzylindrisch ausgestaltet und konzentrisch zur Rotationsachse 22 positioniert. Mittels des Metallrings 94 ist eine topfförmige zentrale Aussparung 95 des B-seitigen Lagerschilds 54 gebildet, innerhalb derer im Montagezustand das B-seitige Lager 42 positioniert ist. Das dem Stator 24 zugewandte Freiende des Metallrings 94 weist einen radial nach innen weisenden Kragen 96 auf, der der Stabilisierung des Außenrings 56 des B-seitigen Lagers 42 dient.

Der Metallring 94 weist an dem gegenüberliegenden axialen Ende drei drehsymmetrisch bezüglich der Rotationsachse 22 angeordnete Laschen 98 auf, die in Radialrichtung R nach außen weisen. Jeweils eine der Laschen 98 ist in Axialrichtung unterhalb einer der Taschen 84 positioniert. Hierbei reichen die Laschen 94 nicht bis zum Kragen 62, sondern lediglich bis zur Hälfte zwischen dem Kragen 62 und der Rotationsachse 22, sodass die Ausdehnung des Kunststoffträgers 82 in Radialrichtung R größer als die des Metallrings 94 ist. Der Metallring 94 ist vollständig mittels des Kunststoffträgers 82, der die Taschen 84, die Führungskonturen 92 und den Kragen 62 umfasst, überzogen, sodass der Metallring 94 vor Beschädigung und Sauerstoff geschützt ist. An dem Metallring 94 sind ferner die Gewinde 66 angebunden, sofern diese vorhanden sind. Mittels der Laschen 98 wird der Kunststoffträger 82 stabilisiert, wenn jeweils einer der elektrischen Anschlüsse 78 in jeweils eine der zugeordneten Taschen 84 durch die jeweilige Öffnung 86 eingeführt und mit dieser verpresst wird. Mit anderen Worten wird zwischen jeweils einer der Taschen 84 und dem zugeordneten elektrischen Anschluss 78 ein Pressfit erstellt.

In Fig. 7 ist eine erste Ausgestaltungsform eines der elektrischen Anschlüsse 78 dargestellt, die zueinander baugleich sind. Der elektrische Anschluss 78 ist einstückig aus einem Blech gefertigt und weist einen in Axialrichtung A verlaufende Schneidklemmkontakt 98 auf. Der Schneidklemmkontakt 98 weist an dessen Öffnung Schneidkanten 100 auf, die in einen Klemmabschnitt 102 übergehen. Im Montagezustand fluchten der Klemmabschnitt 102 sowie die Schlitze 88 der jeweiligen Tasche 84 zumindest teilweise, und die dem jeweiligen elektrischen Anschluss 78 zugeordneten Enden 80 der elektrischen Spulen 28 sind in den Schneidklemmkontakt 98 eingeführt. Bei Montage wird zunächst das Ende 80 in die Schlitze 88 eingelegt und der elektrische Anschluss 78 in die Tasche 84 eingeführt, wobei mittels der Schneidkanten 100 der das Ende 80 bildende Kupferlackdraht oberflächenseitig geöffnet wird und das Ende 80 im Anschluss hieran mittels des Klemmabschnitts 102 an dem elektrischen Anschluss 78 gehalten wird. Infolgedessen ist das Ende 80 elektrisch mit dem elektrischen Anschluss 78 kontaktiert und an diesem festgelegt. Eine Bewegung des Endes 80 in Axialrichtung A wird mittels des elektrischen Anschlusses 78 sowie der Tasche 84 verhindert, ebenso wie in Radialrichtung R. In Tangentialrichtung wird dieses einerseits aufgrund der Klemmwirkung des Klemmabschnitts 102 sowie der partiellen Öffnung mittels der Schneidkanten bei verringertem Außendurchmesser verhindert. Im Montagezustand weisen die Schneidkanten 100 zum Stator 24, sodass mittels des U-förmigen Klemmabschnitts 102 eine Bewegung der Enden 80 in Axialrichtung A aus den Schlitzen 88 verhindert wird.

Der elektrische Anschluss 78 weist ferner einen in Axialrichtung A verlaufenden Klemmkontakt 104 auf, der bezüglich des Schneidklemmkontakts 98 in einer Richtung senkrecht zur Axialrichtung A versetzt ist. In dem hier dargestellten Beispiel ist der Klemmkontakt 104 bezüglich des Schneidklemmkontakts 98 in Radialrichtung R nach innen versetzt. Die Öffnung des Klemmkontakts 104 weist vom Stator 24 weg und zur Elektronik 98 hin, und im Montagezustand ist einer der Elektronickontakte 76 in den Klemmkontakt 104 eingeführt und mit diesem verklemmt. Die Tasche 84 weist weitere Schlitze 105 auf, die mit dem Endbereich des Klemmkontakts 104 im Montagezustand fluchten, was den jeweiligen Elektronikkontakt 76 stabilisiert.

Aufgrund der Versetzung des Schneidklemmkontakts 98 bezüglich des Klemmkontakts 104 ist die Höhe des elektrischen Anschlusses 78 in Axialrichtung A verringert, wobei sich der Schneidklemmkontakt 98 und der Klemmkontakt 104 bei einer Projektion senkrecht zur Axialrichtung A zumindest teilweise überdecken. Der elektrische Anschluss 78 weist ferner in Axialrichtung verlaufende Öffnungen 106 auf, die benachbart zu dem Schneidklemmkontakt 98 bzw. dem Klemmkontakt 104 angeordnet sind. Mittels der Öffnungen 106 ist ein Ausweichbereich für Abschnitte des elektrischen Anschlusses 78 geschaffen, in die dieser folglich elastisch ausweichen kann. Infolgedessen wird die jeweilige Klemmwirkung des Schneidklemmkontakts 98 bzw. des Klemmkontakts 104 realisiert.

In Fig. 8 ist eine weitere Ausgestaltungsform des elektrischen Anschlusses 78 dargestellt, die im Wesentlichen der vorhergehenden Ausführungsform entspricht. Im Unterschied hierzu weist dieser elektrische Anschluss 78 eine Biegekante 108 auf, die in Axialrichtung A verläuft. Mit anderen Worten weist der elektrische Anschluss 78 einen L-förmigen Querschnitt senkrecht zur Axialrichtung A auf. Die Biegekante 108 befindet sich zwischen dem Schneidklemmkontakt 98 und dem Klemmkontakt 104. Mit anderen Worten weist einer der L-Schenkel den Schneidklemmkontakt 98 und der verbleibende den Klemmkontakt 104 auf. Der den Klemmkontakt 104 aufweisende Schenkel ist beispielsweise außerhalb der Tasche 84 positioniert.

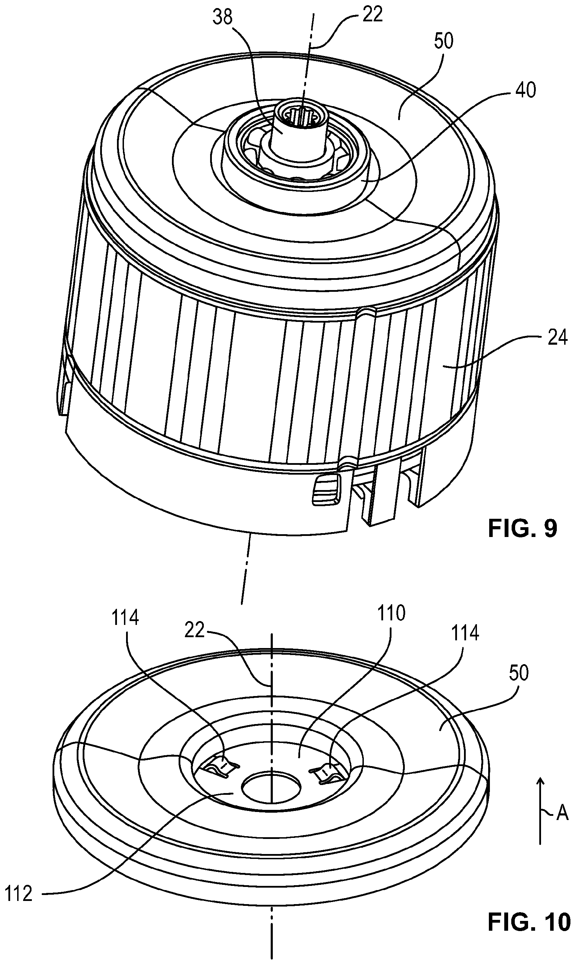

In Fig. 9 ist der Elektromotor 14 von der Antriebsseite 52 her mit Blick auf das A-seitige Lagerschild 50 gezeigt. Das A-seitige Lagerschild 50 ist einstückig und aus einem Kunststoff gefertigt, insbesondere Polyamid, und mit dem Stator 24 laserverschweißt. Das A-seitige Lagerschild 50 weist, wie in Fig. 10 zu ersehen ist, eine zentrale topfförmige Vertiefung 110 auf, deren Öffnung von dem Stator 24 weggerichtet ist. Innerhalb der zentralen topfförmigen Vertiefung 110 des A-seitigen Lagerschilds 50 ist das A-seitige Lager 40 angeordnet. Der Topfboden 112 der topfförmigen Vertiefung 110 des A-seitigen Lagerschilds 50 umfasst drei Vorspannelemente 114, von denen zwei in Fig. 10 dargestellt sind. Die Vorspannelemente 114 sind rotationssymmetrisch bezüglich der Rotationsachse 22 angeordnet, sodass zwischen benachbarten Vorspannelementen 114 ein Winkel von 120° gebildet ist. Jedes Vorspannelement 114 ist in Radialrichtung R angeordnet und weist einen im Wesentlichen C-förmigen Querschnitt parallel zur Rotationsachse 22 auf. Hierbei ist das radial innenliegende Ende des C-Bogens an weiteren Bestandteilen des Topfbodens 110 unter Ausbildung eines Filmscharbiers angeformt, und das verbleibende Ende des C-Bogens ist frei. Beim Einsetzen des A-seitigen Lagers 40 in die topfförmige Vertiefung 110 des A-seitigen Lagerschilds 50 wird dieses Ende jedes der Vorspannelemente 114 zu dem Stator 24 verschwenkt. Infolgedessen wirkt in Axialrichtung A eine Kraft auf den Außenring 46 des A-seitigen Lagers 40, welcher in direktem mechanischem Kontakt mit den Vorspannelementen 114 ist. Infolgedessen ist das A-seitige Lager in Axialrichtung A vorgespannt.

Zusammenfassend weist der Elektromotor 16 eine verringerte Größe in Axialrichtung A auf, da die elektrischen Anschlüsse 78 Bestandteil des B-seitigen Lagerschilds 54 sind, wobei die Klemmkontakte 104 auf unterschiedlichste Arten von Elektronik 98 angepasst werden können. Aufgrund des Kunststoffträgers 82 sind Herstellungskosten reduziert, wobei eine mechanische Integrität des B-seitigen Lagerschilds 54 mittels des Metallrings 94 sichergestellt ist. Aufgrund des Aufsetzens des Kragens 62 auf die Fase 64 und des Laserverschweißens ist eine Größe des Elektromotors 14 in Radialrichtung R hierbei nicht vergrößert. Da der Schneidklemmkontakt 98 bezüglich des Klemmkontakts 104 senkrecht zur Axialrichtung A versetzt ist, weist der elektrische Anschluss 78 eine vergleichsweise geringe Größe in Axialrichtung A auf. Da das A-seitige Lagerschild 50 aus einem Kunststoff erstellt ist und die Vorspannelemente 114 bereitstellt, sind keine weiteren Hilfsmittel zur axialen Vorspannung des A-seitigen Lagers 40 benötigt. Aufgrund der vergleichsweise geringen Anzahl an Bauteilen sind Herstellungskosten sowie eine Herstellungszeit verringert.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den einzelnen Ausführungsbeispielen beschriebene Einzelmerkmale auch auf andere Weise miteinander kombinierbar, ohne den Gegenstand der Erfindung zu verlassen.

### Bezugszeichenliste

- 2: Antriebsstrang
- 4: Verbrennungskraftmaschine
- 6: erste Welle
- 8: Getriebe
- 10: zweite Welle
- 12: Antriebsräder
- 14: Elektromotor
- 16: Getriebeaktuator
- 18: Datenleitung
- 20: Wählhebel
- 22: Rotationsachse
- 24: Stator
- 26: Statorblechpaket
- 28: elektrische Spule
- 30: Phasenwicklung
- 32: Rotorblechpaket
- 34: Luftspalt
- 36: Rotor
- 38: Welle
- 40: A-seitiges Lager
- 42: B-seitiges Lager
- 44: Innenring des A-seitigen Lagers
- 46: Außenring des A-seitigen Lagers
- 48: Kugel des A-seitigen Lagers
- 50: A-seitiges Lagerschild
- 52: Antriebsseite
- 54: B-seitiges Lagerschild
- 56: Außenring des B-seitigen Lagers
- 58: Innenring des B-seitigen Lagers
- 60: Kugel des B-seitigen Lagers
- 62: Kragen
- 64: Fase
- 66: Gewinde
- 68: Elektronik
- 70: Elektronikfach
- 72: Mutter
- 74: Leiterplatte
- 76: Elektronikkontakt
- 78: elektrischer Anschluss
- 80: Ende der elektrischen Spule
- 82: Kunststoffträger
- 84: Tasche
- 86: Öffnung
- 88: Schlitz
- 90: Aussparung
- 92: Führungskontur
- 94: Metallring
- 95: zentrale Aussparung des B-seitigen Lagerschilds
- 96: Kragen
- 98: Schneidklemmkontakt
- 100: Schneidkante
- 102: Klemmabschnitt
- 104: Klemmkontakt
- 105: weiterer Schlitz
- 106: Öffnung
- 108: Biegekante
- 110: topfförmige Vertiefung
- 112: Topfboden
- 114: Vorspannelement

- A: Axialrichtung
- R: Radialrichtung

## Patentansprüche

1. Elektrische Maschine (14), insbesondere Elektromotor eines Kraftfahrzeugs, mit einem eine elektrische Spule (28) aufweisenden Stator (24), der mit einem B-seitigen Lagerschild (54) stirnseitig abgedeckt ist, und mit einem Rotor (36) mit einer Welle (38), der drehbar um eine Rotationsachse (22) gelagert und umfangsseitig von dem Stator (24) umgeben ist, wobei das B-seitige Lagerschild (54) einen elektrischen Anschluss (78) aufweist, an dem ein Ende (80) der elektrischen Spule (28) festgelegt und mit diesem elektrisch kontaktiert ist, **gekennzeichnet dadurch**, das das B-seitige Lagerschild (54) eine in Axialrichtung (A) verlaufende Tasche (84) aufweist, in die der elektrische Anschluss (78) gepresst ist, und wobei der elektrische Anschluss (78) einen Schneidklemmkontakt (98) umfasst, in den das Ende (80) der elektrischen Spule (28) eingeführt ist.

2. Elektrische Maschine (14) nach Anspruch 1,
**dadurch gekennzeichnet,**
**dass** das B-seitige Lagerschild (54) einen zentralen Metallring (94) aufweist, der in einen Kunststoffträger (82) des B-seitige Lagerschilds (54) eingebettet ist, wobei die Ausdehnung des Kunststoffträger (82) in Radialrichtung (R) größer als die des Metallrings (94) ist.

3. Elektrische Maschine (14) nach Anspruch 2,
**dadurch gekennzeichnet,**
**dass** der Metallring (94) hohlzylindrisch ausgestaltet ist, und eine radial nach außen weisende Lasche (98) aufweist, die in Axialrichtung (A) unterhalb der Tasche (84) angeordnet ist.

4. Elektrische Maschine (14) nach Anspruch 2 oder 3,
**dadurch gekennzeichnet,**
**dass** an dem Metallring (94) eine in Axialrichtung (A) verlaufendes, von dem Stator (24) wegweisendes Gewinde (66) angebunden ist, an der eine Elektronik (68) angebunden ist.

5. Elektrische Maschine (14) nach einem der Ansprüche 1 bis 4,
**dadurch gekennzeichnet,**
**dass** der Schneidklemmkontakt (98) in Axialrichtung (A) verläuft, und dass der elektrische Anschluss (78) einen in Axialrichtung (A) verlaufenden Klemmkontakt (104) umfasst, mit dem ein Elektronikkontakt (76) einer Elektronik (68) verklemmt ist, wobei der Schneidklemmkontakt (98) bezüglich des Klemmkontakts (104) senkrecht zur Axialrichtung (A) versetzt ist.

6. Elektrische Maschine (14) nach Anspruch 5,
**dadurch gekennzeichnet,**
**dass** der elektrische Anschluss (78) einstückig aus einem Blech gefertigt ist, und/oder dass der elektrische Anschluss (78) eine in Axialrichtung (A) verlaufende Biegekante (108) aufweist, die sich zwischen dem Schneidklemmkontakt (98) und dem Klemmkontakt (104) befindet.

7. Elektrische Maschine (14) nach einem der Ansprüche 1 bis 6,
**dadurch gekennzeichnet,**
**dass** das B-seitige Lagerschild (54) umfangsseitig einen in Axialrichtung (A) verlaufenden Kragen (62) aufweist, der auf eine stirnseitige Fase (64) des Stators (24) aufgesetzt und an diesem angebunden ist, insbesondere verschweißt.

8. Elektrische Maschine (14) nach einem der Ansprüche 1 bis 7,
**gekennzeichnet durch**
ein einstückig aus einem Kunststoff gefertigtes A-seitiges Lagerschild (50).

9. Elektrische Maschine (14) nach Anspruch 8,
**dadurch gekennzeichnet,**
**dass** das A-seitige Lagerschild (54) eine zentrale topfförmige Vertiefung (110) aufweist, innerhalb derer zumindest teilweise ein A-seitiges Lager (40) angeordnet ist, und dessen Topfboden (112) ein Vorspannelement (114) aufweist, mittels dessen das A-seitigen Lager (40) in Axialrichtung (A) vorgespannt ist.

10. Getriebeaktuator (16) eines Kraftfahrzeugs mit einer elektrischen Maschine (14)
nach einem der Ansprüche 1 bis 9.

## Claims

1. Electric machine (14), in particular electric motor of a motor vehicle, with a stator (24), which has an electric coil (28) and is covered at the end by a B-side end shield (54), and with a rotor (36) with a shaft (38), which is mounted rotatably about an axis of rotation (22) and is surrounded circumferentially by the stator (24), the B-side end shield (54) having an electrical connection (78), to which one end (80) of the electrical coil (28) is fixed and with which it is electrically contacted,
**characterized in that**
the B-side end shield (54) has a pocket (84), which runs in the axial direction (A) and into which the electrical connection (78) is pressed, and the electrical connection (78) comprising an insulation displacement contact (98), into which the end (80) of the electrical coil (28) is inserted.

2. Electric machine (14) according to claim 1,
**characterized in**
**that** the B-side end shield (54) has a central metal ring (94), which is embedded in a plastic carrier (82) of the B-side end shield (54), the extent of the plastic carrier (82) in the radial direction (R) being greater than that of the metal ring (94).

3. Electric machine (14) according to claim 2,
**characterized in**
**that** the metal ring (94) is of hollow cylindrical design and has a radially outwardly pointing lug (98), which is arranged below the pocket (84) in the axial direction (A).

4. Electric machine (14) according to claim 2 or 3,
**characterized in**
**that** a thread (66) running in the axial direction (A) and pointing away from the stator (24) is attached to the metal ring (94), to which thread an electronic system (68) is attached.

5. Electric machine (14) according to one of claims 1 to 4,
**characterized in**
**that** the insulation displacement contact (98) runs in the axial direction (A), and that the electrical connection (78) comprises a clamping contact (104), which runs in the axial direction (A) and with which an electronic contact (76) of an electronic system (68) is clamped, the insulation displacement contact (98) being perpendicularly offset to the axial direction (A) with respect to the clamping contact (104).

6. Electric machine (14) according to claim 5,
**characterized in**
**that** the electrical connection (78) is manufactured in one piece from a metal sheet, and/or that the electrical connection (78) has a bending edge (108), which runs in the axial direction (A) and is located between the insulation displacement contact (98) and the clamping contact (104).

7. Electric machine (14) according to one of claims 1 to 6,
**characterized in**
**that** on the circumference the B-side end shield (54) has a collar (62), which runs in the axial direction (A) and is placed on an end-face chamfer (64) of the stator (24) and is attached to the latter, in particular welded.

8. Electric machine (14) according to one of claims 1 to 7,
**characterized by**
an A-side end shield (50) manufactured in one piece from a plastic.

9. Electric machine (14) according to claim 8,
**characterized in**
**that** the A-side end shield (54) has a central pot-shaped recess (110), within which an A-side bearing (40) is arranged at least in part, and whose pot base (112) has a preloading element (114), by means of which the A-side bearing (40) is preloaded in the axial direction (A).

10. Transmission actuator (16) of a motor vehicle having an electric machine (14) according to one of claims 1 to 9.

## Revendications

1. Machine électrique (14), en particulier moteur électrique d'un véhicule automobile, avec un stator (24) comprenant une bobine électrique (28), qui est recouvert frontalement par un flasque (54) côté B, et avec un rotor (36) avec un arbre (38), qui est monté de manière rotative autour d'un axe de rotation (22) et est entouré à la périphérie par le stator (24), le flasque (54) côté B comprenant une connexion électrique (78), à laquelle une extrémité (80) de la bobine électrique (28) est fixée et est en contact électrique avec celle-ci,
**caractérisée en ce que**
le flasque (54) côté B comprenant une poche (84) s'étendant dans la direction axiale (A), dans laquelle poche (84) la connexion électrique (78) est pressée, et la connexion électrique (78) comprenant un contact autodénudant (98), dans lequel l'extrémité (80) de la bobine électrique (28) est introduite.

2. Machine électrique (14) selon la revendication 1,
**caractérisée en ce**
**que** le flasque côté B (54) comprend un anneau métallique centrale (94), qui est encastré dans un support en plastique (82) du flasque côté B (54), l'extension du support en plastique (82) dans la direction radiale (R) étant supérieure à celle de l'anneau métallique (94).

3. Machine électrique (14) selon la revendication 2,
**caractérisée en ce**
**que** l'anneau métallique (94) est réalisé sous forme de cylindre creux et comprend une patte (98) dirigée radialement vers l'extérieur, qui est disposée en direction axiale (A) en dessous de la poche (84).

4. Machine électrique (14) selon la revendication 2 ou 3,
**caractérisée en ce**
**qu'**un filetage (66) s'étendant dans la direction axiale (A) et s'éloignant du stator (24) est relié à l'anneau métallique (94), auquel une électronique (68) est reliée.

5. Machine électrique (14) selon l'une des revendications 1 à 4,
**caractérisée en ce**
**que** le contact autodénudant (98) s'étend dans la direction axiale (A), et **en ce que** la connexion électrique (78) comprend un contact de serrage (104) s'étendant dans la direction axiale (A), avec lequel un contact électronique (76) d'une électronique (68) est serré, le contact autodénudant (98) étant décalé par rapport au contact de serrage (104) perpendiculairement à la direction axiale (A).

6. Machine électrique (14) selon la revendication 5,
**caractérisée en ce**
**que** la connexion électrique (78) est fabriquée d'une seule pièce à partir d'une tôle, et/ou **en ce que** la connexion électrique (78) comprend une arête de pliage (108) s'étendant dans la direction axiale (A), qui se trouve entre le contact autodénudant (98) et le contact de serrage (104).

7. Machine électrique (14) selon l'une des revendications 1 à 6,
**caractérisée en ce**
**que** le flasque (54) côté B comprend sur sa périphérie une collerette (62) s'étendant dans la direction axiale (A), qui est posée sur un chanfrein (64) frontal du stator (24) et est reliée à celui-ci, en particulier par soudage.

8. Machine électrique (14) selon l'une des revendications 1 à 7,
**caractérisée par**
un flasque (50) côté A, fabriqué d'une seule pièce à partir d'une matière plastique.

9. Machine électrique (14) selon la revendication 8,
**caractérisée en ce**
**que** le flasque (54) côté A comprend un renfoncement (110) central en forme de pot, à l'intérieur duquel est disposé au moins partiellement un palier (40) côté A, et dont le fond de pot (112) comprend un élément de précontrainte (114), au moyen duquel le palier (40) côté A est précontraint dans la direction axiale (A).

10. Actionneur de boîte de vitesses (16) d'un véhicule automobile avec une
